Europäisches Patentamt

**European Patent Office**

**Office européen des brevets**

(19)

(11) Publication number: **0 105 746**
**B1**

(12) **EUROPEAN PATENT SPECIFICATION**

(45) Date of publication of patent specification: **20.01.88**

(21) Application number: **83305936.3**

(22) Date of filing: **30.09.83**

(51) Int. Cl.⁴: **G 11 B 25/06,** G 11 B 15/66,
G 11 B 31/00

(54) **Tape player.**

(30) Priority: **01.10.82 JP 170920/82**
**01.10.82 JP 170921/82**
**01.10.82 JP 170922/82**
**01.10.82 JP 147967/82 u**
**01.10.82 JP 147968/82 u**
**01.10.82 JP 147969/82 u**

(43) Date of publication of application:
**18.04.84 Bulletin 84/16**

(45) Publication of the grant of the patent:
**20.01.88 Bulletin 88/03**

(84) Designated Contracting States:
**DE FR GB**

(56) References cited:
**EP-A-0 044 216**
**GB-A-2 074 365**
**GB-A-2 090 459**
**US-A-4 303 955**

(73) Proprietor: **Kabushiki Kaisha Toshiba**
**72, Horikawa-cho Saiwai-ku**
**Kawasaki-shi Kanagawa-ken 210 (JP)**

(72) Inventor: **Tomita, Seiji c/o Patent Division**
**Tokyo Shibaura Denki K.K. 72, Horikawa-cho**
**Saiwai-ku Kawasaki-shi Kanagawa-ken (JP)**

(74) Representative: **Newstead, Michael John et al**
**Haseltine Lake & Co. 28 Southampton Buildings**
**Chancery Lane**
**London, WC2A 1AT (GB)**

## Description

This invention relates to apparatus for transporting tape in a cassette as set out in the first part of claim 1.

As prior art, there can be mentioned GB—A—2 090 459 and EP—A—44 216.

Recently, portable type cassette tape players of compact size and light in weight, utilizing a headphone, and operable in reproduction only in two-way stereo have become popular, so that a listener with a headphone can enjoy the reproduction of a tape while, for instance, rambling around the street or elsewhere. Along with such a tendency, tape players of the aforementioned type having sizes comparable with an ordinary case for storing cassette tapes are going to be developed.

In order to minimize the size of the tape player, it is essential to find out a better arrangement and shape of the operating buttons or keys which operate the tape player in reproduction, rewinding and stopping operations, and to improve the tape player so as to be operable more efficiently and portable more easily.

In view of these points, the small size tape players heretobefore developed are not yet satisfactory, involving various shortcomings in their design and construction. For instance, the size of the tape players is not yet sufficiently small to be carried in a breast pocket of a shirt or elsewhere, and hence the tape player is ordinarily carried in a special holder. Thus, it is urgently required that the above described shortcomings of the conventional tape players are eliminated and the size of the tape player is further reduced to such an extent that it can be carried in a breast pocket of the shirt.

According to the present invention, there is apparatus for transporting tape in a cassette having a reel, said apparatus comprising:

a housing;

a cover pivotably attached to a first edge of said housing, said housing and said cover defining a cassette receiving space therebetween;

a first spindle assembly attached to said housing and having a first rotatable portion for co-operating with said reel and projecting in said space;

means for driving said first rotatable portion of said first spindle assembly; and

means for locking the position of said cover with respect to said housing, characterised in that said locking means includes latch means, disposed on said spindle assembly, and engaging means, disposed on said cover, for selectively engaging said latch means and

said housing has dimensions and said cover is formed such that a tape cassette operable in said receiving space extends beyond said housing in at least one direction.

The present invention will now be described, by way of example, with reference to the accompanying drawings, in which:

FIGURE 1 is a perspective view of a tape player;

FIGURE 2 is a perspective view showing the tape player shown in FIGURE 1 and a cassette tape to be loaded;

FIGURE 3 is a perspective view of the tape player shown in FIGURE 1 loaded with a cassette tape;

FIGURE 4 is a side view, partly in section, of the tape player in a loaded state as shown in FIGURE 3;

FIGURE 5 is a persepective view showing a state wherein a tuner pack is loaded in the tape player shown in FIGURE 1;

FIGURE 6 is a perspective view showing a mechanism portion used in the tape player shown in FIGURE 1;

FIGURE 7 is a perspective view showing a state wherein a cassette tape is inserted into a cassette tape holder;

FIGURES 8(a) and 8(b) are cross-sectional views showing operational states of a driving mechanism used in the tape player shown in FIGURE 1;

FIGURE 9 is a perspective view showing a transfer drive mechanism used with the mechanism shown in FIGURES 8(a) and 8(b); and

FIGURE 10 is a cross-sectional view showing an important part of a locking mechanism of a cover plate used in the cassette tape player shown in FIGURE 1.

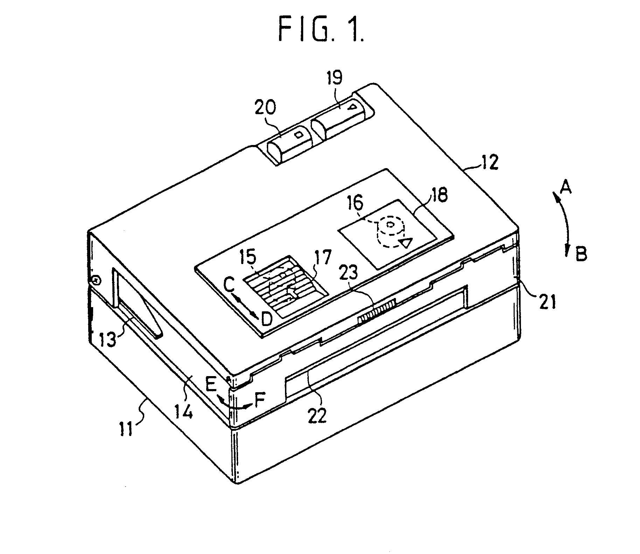

FIGURE 1 illustrates a general construction of a tape player constituting an embodiment of the present invention. In the embodiment, housing 11 of a box-like configuration has a size smaller than the outer periphery of a cassette tape to be loaded in housing 11. One side of housing 11 is covered by cover plate 12 of an L-shaped cross-section so that when a cassette tape is received therebetween, the peripheral portion of the cassette tape projects outwardly from housing 11 and cover plate 12. Cover plate 12 is pivotally secured to housing 11 so that it is manually swingable in the directions of arrows A and B. Cover plate 12 is lightly locked in its open position for preventing fluctuation of cover plate 12 out of the open position, while it is heavily locked in its closed position for assuring the same position as described hereinlater. Cover plate 12 is provided with cassette tape holder 13 which is movable in a relation interlinked with the opening and closing operation of cover plate 12 for holding the cassette tape in cassette tape holder 13.

Housing 11 is provided with cassette tape receiving portion 14 which receives the cassette tape at a predetermined part when cover plate 12 is closed, and a mechanism (not shown) for operating the tape player as described hereinlater. A reproducing head and pinch roller, which are described hereinlater, are also provided in housing 11 at positions opposite the tape exposing portion of the cassette tape in such a manner that the reproducing head and the pinch roller are movable in an interlinked relation with the opening and closing operation of cover plate 12.

In cassette tape receiving portion 14 of housing 11, there are provided a pair of reel supporting spindles 15 and 16 indicated by broken lines in FIGURE 1. Furthermore, cover locking manipulator 17 and tape rewinding manipulator 18 are provided on cover plate 12 at positions opposite reel supporting spindles 15 and 16 either one of which is operable as a tape winding spindle depending on whether the tape player is operated in a tape reproducing mode or a tape rewinding mode. Cover locking manipulator 17 is operable in the direction of arrow C, thereby unlocking cover plate 12 as described hereinlater. On the other hand, tape rewinding manipulator 18 is made operable when it is depressed downwardly.

Reproduction manipulator 19 and stop manipulator 20, both in the form of buttons, are provided on one side of cover plate 12 at positions spaced apart from a planar portion of the cassette tape when it is loaded, so that manipulators 19 and 20 can be depressed perpendicularly to the surface of cover plate 12. Front door 21 is provided on the other side of cover plate 12 opposite cassette tape holder 13. Front door 21 is substantially flat having cut-away portion 22 at an intermediate position, and is coupled with cover plate 12 so that front door 21 is swingable in the directions of arrows E and F. Torsion spring 23 is provided between cover plate 12 and front door 21 so as to urge front door 21 perpendicularly to cover plate 12. As a consequence, when cover plate 12 is closed without loading the cassette tape, front door 21 is held vertically to cover plate 12, and is interposed between cover plate 12 and housing 11 as shown in FIGURE 1, thus reinforcing cover plate 12 at the corresponding end thereof.

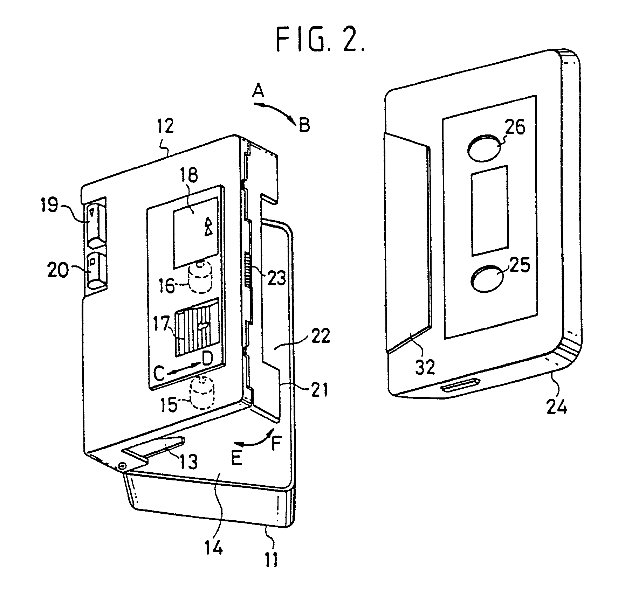

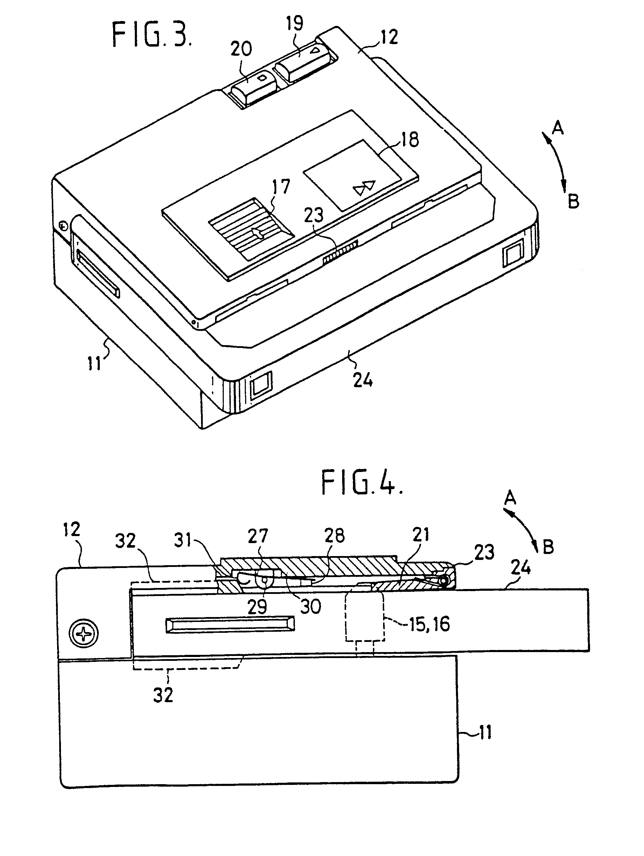

When cassette tape 24 is to be loaded, cover plate 12 is swung open as shown in FIGURE 2. Then the tape exposing side of cassette tape 24 is directed toward cassette tape holder 13, and cassette tape 24 is forced into cassette tape holder 13. At this time, front door 21 held by torsion spring 23 perpendicular to cover plate 12 is rotated by the leading edge of cassette tape 24 in the direction of arrow E against the resilience of torsion spring 23, so that front door 21 is brought into the position underside of cover plate 12 overlying the upper surface of cassette tape 24. In this state, reel hub portions 25 and 26 of cassette tape 24 are brought into cut-away portion 22 of front door 21, and when cover plate 12 is closed, reel supporting spindles 15 and 16 are forced into reel hub portions 25 and 26 through cut-away portion 22. Upon closure of cover plate 24, cassette tape 24 is loaded in cassette tape receiving portion 14 in a so-called bitten manner as best illustrated in FIGURE 3, while a peripheral portion of cassette tape 24 is held outside of the tape player.

FIGURE 4 illustrates the loading condition of cassette tape 24 in more detail. On the internal surface of cover plate 12 is provided leaf spring 27 having a stem portion secured to securing portion 28 of cover plate 12, while an intermediate portion of leaf spring 27 is brought into engagement with projections 29 and 30 projecting from cover plate 12. An end leaf spring 27 is bent into the form of an abutting portion 31 which, when cover plate 12 is closed, abuts against a central edge of thickening portion 32 of cassette tape 24 away from the tape exposing edge of the same (see FIGURE 2). As a result, cassette tape 24 is urged by abutting end portion 31 of leaf spring 27 to ensure the engagement with reel supporting spindles 15 and 16, and also toward the hereinlater described reproducing head of the tape player. That is, cassette tape 24 is firmly held in its loaded position under the resilience of leaf spring 27.

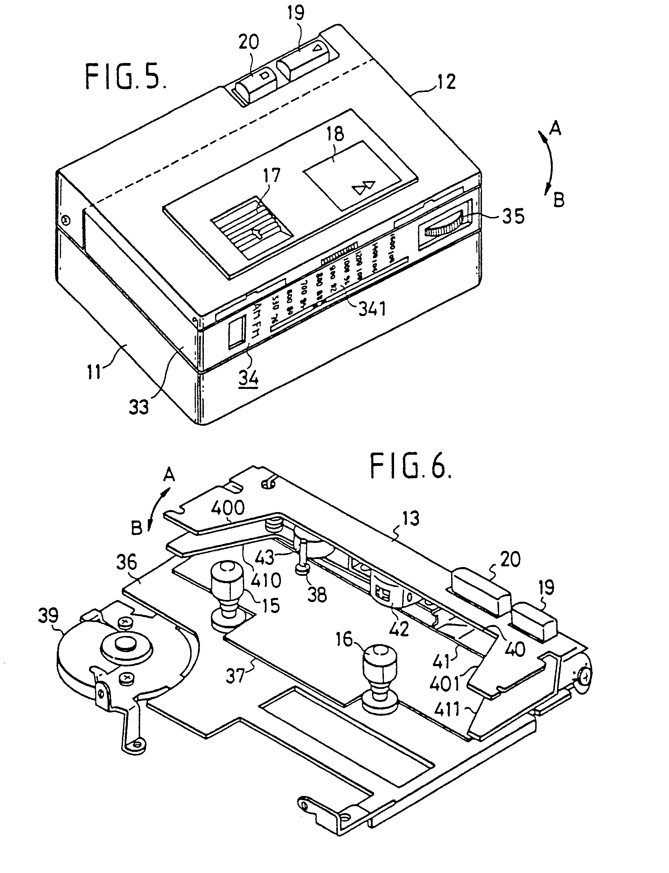

FIGURE 5 illustrates the tape player wherein radio tuner pack 33 is inserted in the tape player instead of cassette tape 24. In this manner, not only the playing or the reproduction of cassette tapes but also the reception of radio broadcasts can be achieved by the aid of radio tuner pack 33. Radio tuner pack 33 comprises a tuner circuit for receiving a radio wave, detecting and amplifying audio frequency signals and a pack encasing the tuner circuit. The peripheral measurements of radio tuner pack 33 are made equal to those of housing 11. When a desired broadcasting station is selected, tuning dial 35 of control portion 34 inclusive of display portion 341 is manipulated. The output of the tuner circuit is introduced through connection terminals (not shown) into a main amplifier circuit of the tape player, and the amplifier output is delivered to the headphone (not shown). Since control portion 34 of radio tuner pack 33 is exposed outside in a closed state of cover plate 12, the operation of control portion 34 can be performed without opening cover plate 12.

As is apparent from the above description, control portion 34 is provided on one side of radio tuner pack 33 so as to be operable from outside, and since radio tuner pack 33 is made into a configuration substantially equal to that of housing 11, control portion 34 of radio tuner pack 33 loaded in the tape player is exposed to the outside between housing 11 and cover plate 12, and the manipulation from outside of control portion 34 is thereby made possible. Because of the above described arrangement, there is no necessity of providing another control portion for radio tuner pack 33 separately in the tape player, and the construction of the tape player is thereby much simplified and the size of tape player is substantially reduced.

FIGURE 6 illustrates the hereinbefore mentioned tape player operating mechanism and cassette tape holder 13. In the drawing, the tape player operating mechanism is provided on main chassis 36. Reel supporting spindles 15 and 16 project upward from main chassis 36. A substantially shading plate 37 is extended in parallel with main chassis 36 so as to cover a hereinafter described group of gears constituting a driving mechanism of reel supporting spindles 15 and 16. On main chassis 36, there are further provided capstan 38 operable as a rotating shaft for a hereinafter described flywheel, and electric motor 39 for rotating reel supporting spindles 15 and 16.

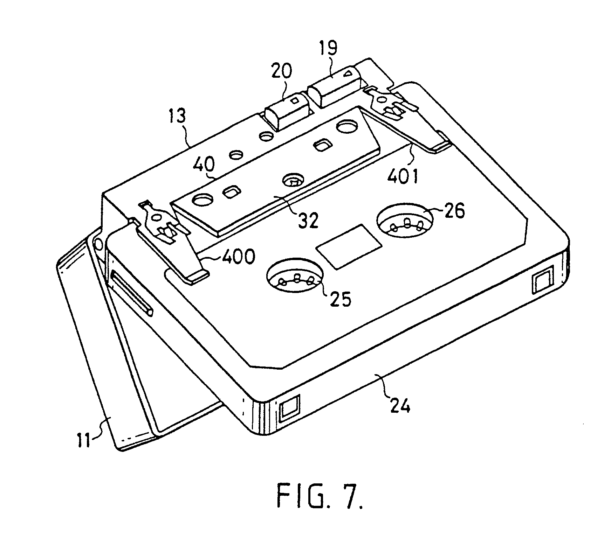

The aforementioned cassette tape holder 13 is secured to one side edge of main chassis 36 so that cassette tape holder 13 is swingable in the directions of arrows A and B. Cassette tape holder 13 is bent into the form of a channel shaped cross-section having upper and lower planar portions between which cassette tape 24 (see FIGURE 2) is squeezed in the thicknesswise direction. In accordance with thickening portion 32 of cassette tape 24 (see FIGURE 2), cut-away portions 40 and 41 formed intermediately of the upper and lower planar portions of cassette tape holder 13. At both ends of cut-away portions 40 and 41, there are provided inclined portions 400, 401 and 410, 411 extending laterally outwardly from the bottoms of cut-away portions 40 and 41. When cassette tape 24 is inserted in cassette tape holder 13 as shown in FIGURE 7, the lateral ends of thickening portion 32 of cassette tape 24 are guided by inclined portions 400, 401 and 410, 411 of cut-away portions 40 and 41 so that cassette tape 24 is finally held at a position where the lateral ends of thickening portion 32 on the tape exposing side of cassette tape 24 abut against the bottoms of inclined portions of cut-away portions 40 and 41.

Since cut-away portions 40 and 41 having inclined portions 400, 401 and 410, 411 are provided in cassette tape holder 13 at positions corresponding to thickening portion 32 of cassette tape 24 as described above, cassette tape 24 inserted into cassette tape holder 13 is guided by inclined portions 400, 401 and 410, 411 with thickening portion 32 held between inclined portions 400, 401 and 410, 411, so that cassette tape 24 is firmly held at its final portion defined by the bottom portions of cut-away portions 40 and 41 of cassette tape holder 13.

Referring again to FIGURE 6, reproducing head 42 and pinch roller 43 contactable with capstan 38 are provided within the bottom portion of channel shaped cassette tape holder 13. Furthermore, reproduction manipulator 19 and stop manipulator 20 are supported by cassette tape holder 13. When cover plate 12 (see FIGURE 3) is placed on cassette tape holder 13, reproduction and stop manipulators 19 and 20 projecting upward through cover plate 12 can be manipulated from outside of cover plate 12. When cover plate 12 is opened, cassette tape holder 13 interlinked with cover plate 12 is rotated in the direction of arrow A into the opened state. In this case, reproduction and stop manipulators 19 and 20, reproducing head 42, and pinch roller 43 are moved together with cassette tape holder 13.

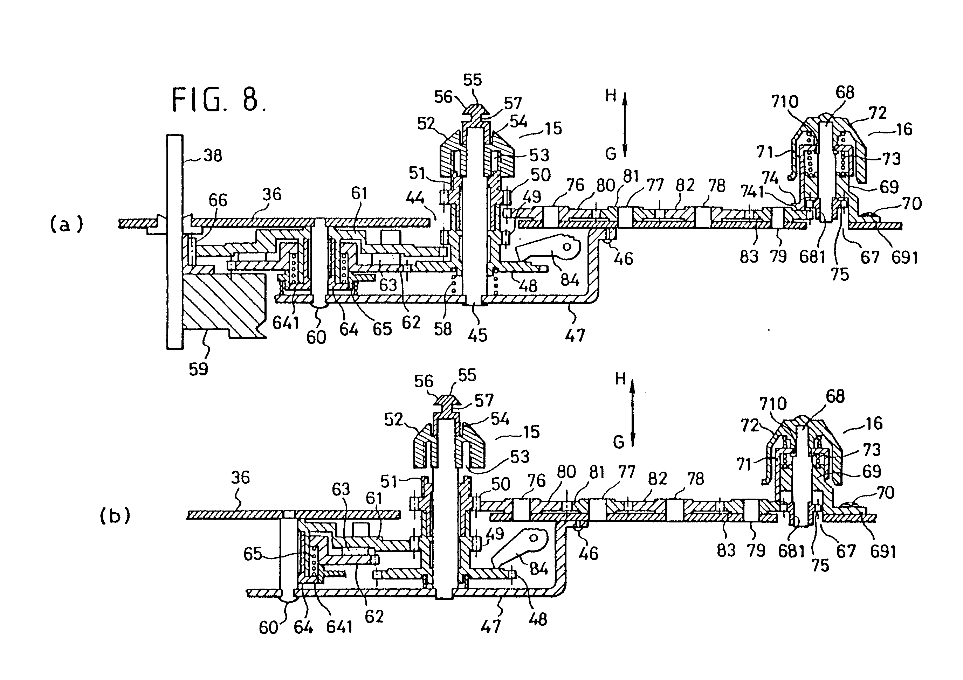

FIGURES 8(a) and 8(b) illustrate in detail the driving mechanism of the tape player operating in the reproducing and rewinding states, respectively. Reel supporting spindles 15 and 16, either one of which is operable as a tape winding spindle depending on the operating mode of the tape player, are arranged to project through main chassis 36. As shown in FIGURE 8(a), reel supporting spindle 15 that is operable as a tape winding spindle in the reproduction mode of the tape player projects upward through opening 44 formed in a part of main chassis 36. Shaft 45 projecting though opening 44 has a base portion fixedly supported by supporting member 47 which extends in parallel with main chassis 36 and one end of which is secured to main chassis 36 by screw 46. First, second and third gears 48, 49 and 50 arranged vertically and combined into an integral piece are mounted on shaft 45 at a portion passing through opening 44 in a manner freely rotatable around shaft 45 and freely slidable therealong in the directions of arrows H and G. Among these gears, third gear 50 at the top is provided with engaging portion 51 projecting upwardly from the upper surface of third gear 50. On the other hand, shaft 45 has a reduced diameter portion at a part thereof projecting upwardly from third gear 50, and reel cap 52 engageable with the reel hub of cassette tape 24 is mounted freely rotatably on the reduced diameter portion of shaft 45. Reel cap 52 is provided on the lower surface with recess 53 engageable with engaging portion 51 projecting from third gear 50, and on the upper surface of reel cap 52, there is provided recess 54 surrounding shaft 45. That is, the reduced diameter portion of shaft 45 projects upward from recess 54, and locking member 55 described hereinafter in more detail is fixedly mounted on the projecting portion of shaft 45. Flange portion 56 having peripheral surface 561 tapered downward toward main chassis 36 is provided at the top of locking member 55, and locking groove 57 is formed around the lower part of tapered surface 561. Coil spring 58 is inserted between the downward surface of first gear 48 and supporting member 47, so that coil spring 58 urges first, second and third gears 48, 49 and 50 in the direction H.

On the other hand, another shaft 60 is fixedly mounted on main chassis 36 at a position intermediate between flywheel 59 supported by capstan 38 and reel supporting spindle 15. Fourth gear 61 having a larger diameter and fifth gear 62 having a smaller diameter are mounted on shaft 60 so that these are freely rotatable, respectively. Annular friction member 63 is interposed between fourth and fifth gears 61 and 62, Fixed member 64 of a substantially cylindrical configuration and having flange portion 641 at the lower end, is fixedly mounted on a lower part of shaft 60 as viewed in FIGURE 8(a). By means of a coil spring 65 inserted between flange portion 641 of fixed member 64 and fifth gear 62, fifth gear 62 is urged to fourth gear 61 through friction member 63. That is, fourth gear 61 is interlinked with fifth gear 62 through friction member 63.

Furthermore, fourth gear 61 meshing with gear 66 cooperating with flywheel 59 is positioned between first gear 48 and second gear 49 both provided for reel supporting spindle 15, and when first, second and third gears 48, 49 and 50 are shifted in the direction G, fourth gear 61 meshes with second gear 49. In the reproducing state of the tape player, however, fifth gear 62 is engaged with first gear 48 provided for reel supporting spindle 15, and when first, second and third gears 48, 49 and 50 are shifted as described above in the direction G (tape rewinding state), fifth gear 62 is disengaged from first gear 48.

On the other hand reel supporting spindle 16 operable as a tape winding spindle in the rewinding mode of operation projects upward through another opening 67 formed in main chassis 36. Shaft 68 is rotatably provided upwardly from main chassis 36 and substantially in alignment with the central part of opening 67. The middle part of shaft 68 is supported by shaft supporting member 69 of a substantially cylindrical configuration having at a lower part thereof projecting portion 691 which is secured to main chassis 36 by screw 70. Projecting upward from shaft supporting member 69, there is provided a reduced diameter portion of shaft 68. Locking member 71 of generally cylindrical configuration and having a bottom wall provided with through-hole 710 is firstly mounted on the reduced diameter portion of shaft 68, and then reel cap 72 for tape rewinding use is forcibly mounted on the top of the reduced diameter portion so that reel cap 72 is rotated integrally with shaft 68, while locking member 71 is left free from the rotation of shaft 68. Coil spring 73 is inserted between the upper end of shaft supporting member 69 and the bottom wall of locking member 71. Coil spring 73 urges shaft 68 in the direction H through locking member 71 and reel cap 72. Locking member 71 has, at a lower end thereof, first engaging portion 74 having tapered part 741 tapering outwardly upward from the lower end of locking member 71. The periphery of first engaging portion 74 is made larger than the diameter of opening 67 formed in main chassis 36.

Shaft 68 is further provided with reduced diameter portion 681 projecting downwardly, as viewed in the drawing, from shaft supporting member 69. Sixth gear 75 of a small diameter is fixedly mounted on reduced diameter portion 681, such that gear 75 can be rotated and shifted integrally with shaft 68.

On a part of main chassis 36 extending between reel supporting spindles 15 and 16, there are provided shafts 76, 77, 78 and 79 fixedly mounted on main chassis 36. Seventh, eighth, ninth and tenth gears 80, 81, 82 and 83 are rotatably mounted on shafts 76, 77, 78 and 79. In the reproducing mode of operation, seventh gear 80 adjacent reel supporting spindle 15 is placed between second gear 49 and third gear 50. However, when rewinding manipulator 18 (see FIGURE 1) is depressed (shifting the operation to the rewinding mode), seventh gear 80 is brought into engagement with third gear 50 under the action of rewinding operation actuating member 84 which depresses first gear 48 in the direction G in FIGURE 8(b). Furthermore, tenth gear 83 which has been located below sixth gear 75 in reel supporting spindle 16 during the reproducing operation is brought into engagement with sixth gear 75 as shown in FIGURE 8(b) upon depression of rewinding manipulator 18 (see FIGURE 1).

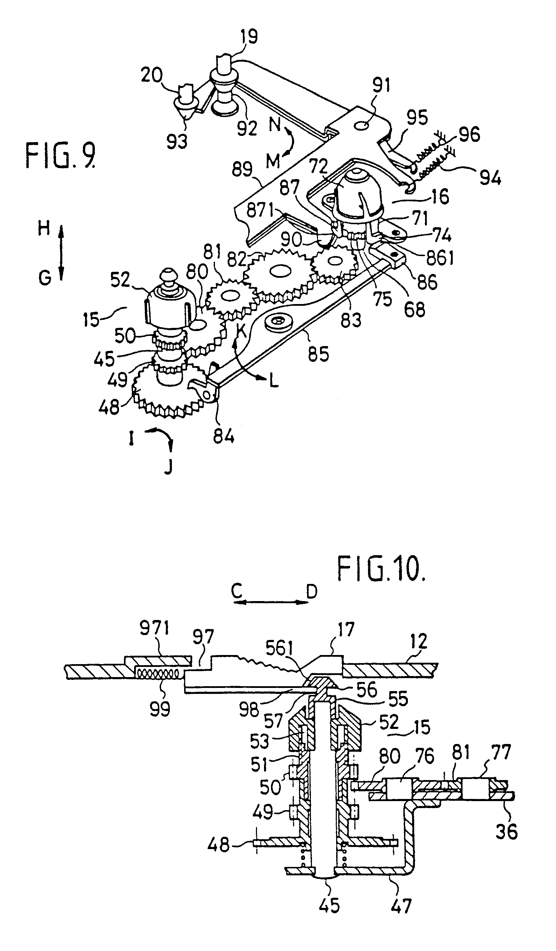

FIGURE 9 illustrates a transfer mechanism of the operational mode used for controlling the above described tape driving system. The aforementioned tape rewinding actuation member 84 is arranged to be rotatable in the directions of arrows I and J relative to main chassis 36. Tape rewinding actuation member 84 is brought into engagement with one end of tape rewinding drive member 85, a middle part of which is pivotally secured to main chassis 36. The other end of rewinding drive member 85 is formed into driving portion 86 having tapered part 861. Tapered part 861 engages with tapered part 741 of first engaging portion 74 of locking member 71 on reel supporting spindle 16. When tape rewinding manipulator 18 (in FIGURE 1) is depressed, first engaging portion 74 of locking member 71 urges driving portion 86 of tape rewinding drive member 85 to rotate the same in the direction of arrow K. Thus the first mentioned end of tape rewinding drive member 85 drives rewinding actuation member 84 in the direction I, and urges first gear 48 in spindle 15 in the direction G. As a result, first, second and third gears 48, 49 and 50 integrally are shifted in the direction G relative to shaft 45 against the force of coil spring 58, thereby bringing third gear 50 and second gear 49 into engagement with seventh gear 80 and fourth gear 61, respectively. Sixth gear 75 fixed to shaft 68 is brought into engagement with tenth gear 83 when rewinding manipulator 18 is depressed.

As shown in FIGURE 9, locking member 71 in reel supporting spindle 16 is provided with second engaging portion 87 having tapered part 871 at a position opposite to that of first engaging portion 74. Second engaging portion 87 is brought into engagement with engaging portion 90 formed on an end of locking plate 89 when reel supporting spindle 16 is depressed. Locking plate 89 is horizontally swingable around vertically disposed pivot pin 91 projecting from main chassis 36. Another end of locking plate 89 engages with driving portions 92 and 93 integrally formed with reproduction and stop manipulators 19 and 20, respectively.

When reproduction manipulator 19 is depressed, driving portion 92 of reproduction manipulator 19 rotates locking plate 89 in the direction of arrow M against the force of coil spring 94, and is locked in the depressed position by the end of locking plate 89. However, when stop manipulator 20 is depressed in this state, driving portion 93 of stop manipulator 20 rotates locking plate 89 in the direction M in excess of the locking position, thus unlocking driving portion 92 of reproduction manipulator 19. Switch slider 95 is further provided on the lower surface of locking plate 89. In response to the depression of reproduction manipulator 19, switch slider 95 on locking plate 89 turns ON a power switch (not shown) provided for operating electric motor 39 (see FIGURE 6) against the force of coil spring 96, so that electric motor 39 (see FIGURE 6) is thereby rotated in a predetermined condition. When stop manipulator 20 is operated, locking plate 89 and switch slider 95 are brought into their original positions.

With the above described construction, when reproduction manipulator 19 is depressed to operate the tape player in the reproduction mode, reproducing head 42 and pinch roller 43 (in FIGURE 6) are shifted to their operating positions where reproducing head 42 abuts the magnetic tape at the tape exposing side of cassette tape 24, while pinch roller 43 is urged to capstan 38 with interposition of the magnetic tape.

Furthermore, locking plate 89 and switch slider 95 are rotated against the force of coil springs 94 and 96 in the direction M as shown in FIGURE 9 in response to the depression of reproduction manipulator 19 which is locked in the depressed position by locking plate 89. At this time, switch slider 95 turns ON the power switch to operate electric motor 39 (see FIGURE 6).

Electric motor 39 drives flywheel 59 in FIGURE 8(a). The driving force of electric motor 39 is further transmitted through gear 66 rotated together with flywheel 59 to fourth and fifth gears 61 and 62, among which fifth gear 62 drives first gear 48. Since engaging portion 51 of third gear 50 is engaging with recess 53 of reel cap 52, the torque from first gear 48 is transmitted to reel cap 52 of reel supporting spindle 15, thus enabling the reproducing operation of the tape player to be carried out.

In a case where tape rewinding manipulator 18 is depressed, reel cap 72 on reel supporting spindle 16 is thereby depressed downwardly as viewed in FIGURE 8(b), and locking member 71 is shifted against the force of coil spring 73 in the direction G. Second engaging portion 87 of locking member 71 activates switch slider 95 so as to turn ON the power switch and to operate electric motor 39 (see FIGURE 6). Simultaneously, second engaging portion 87 of locking member 71 engages with engaging portion 90 of locking plate 89, thereby maintaining locking plate 89 in its operating position. By the depression of reel cap 72 of reel supporting spindle 16, shaft 68 and sixth gear 75 are moved integrally in the direction G, so that sixth gear 75 is brought into engagement with tenth gear 83. At the same time, first engaging portion 74 of locking member 71 rotates tape rewinding drive member 85 and tape operation actuating member 84 as described hereinbefore, thereby depressing first gear 48 in the direction G. Thus, first, second and third gears 48, 49 and 50 are moved integrally in the direction G relative to shaft 45, so that the engagement between engaging portion 51 projecting from third gear 50 and recess 53 of reel cap 52 is released. As a result, the torque used for rotating flywheel 59 is transmitted successively from gear 66 through fourth gear 61, second gear 49, third gear 50, seventh gear 80, eighth gear 81, ninth gear 82, tenth gear 83 to sixth gear 75, so that reel cap 72 of reel supporting spindle 16 is rotated at a rotating speed faster than that of the reproduction operation.

In a case where a quick shift operation of the tape player is required, a quick shift manipulator (not shown) is operated to electrically disconnect a governor circuit (not shown) from electric motor 39 thereby to rotate the same at a speed much higher than the reproduction speed.

Since one of reel supporting spindles 15 and 16 supporting reel hubs 25 and 26 of cassette tape 24, which is operable as a tape winding spindle during the tape rewinding operation, is thus utilized in connection with the tape rewinding manipulator to be depressed in its axial direction, wasteful parts in the construction can be eliminated, and reliable operation of the tape player is assured. Furthermore, since the transfer and driving operations in the tape rewinding mode of operation are carried out by the tape rewinding drive members cooperating with reel supporting spindles 15 and 16, the construction of the tape player is substantially simplified, and further minimization of the tape player is possible.

FIGURE 10 illustrates in detail the locking mechanism for locking cover plate 12 of the tape player in its closed position. As is described hereinbefore, locking member 55 is secured to the upper end of shaft 45 of the reproducing side reel supporting spindle 15. On the other hand, through-hole 97 of a substantially rectangular configuration is formed through cover plate 12 at a position opposite to locking member 55. In through-hole 97, the aforementioned cover locking manipulator 17 is provided to be slidable in the direction of arrows C and D. The underside of cover locking manipulator 17 is provided with locking portion 98 which projects from cover locking manipulator 17 to a position opposite locking groove 57 formed in locking member 55. One end of coil spring 99 is secured to an end of cover locking manipulator 17, while the other end of coil spring 99 is secured to step portion 971 formed at the other end of through-hole 97. Because of coil spring 99, cover locking manipulator 17 is urged in the direction D relative to cover plate 12.

In a case when cover plate 12 is opened from its closed state, cover locking manipulator 17 is shifted in the direction C against the force of coil spring 99. Thus, locking portion 98 projecting from cover locking manipulator 17 retracts from locking groove 57 of locking member 55 in the direction C, so that cover plate 12 is released out of the locked state. In this case, it would be advantageous that a spring member is further provided to urge cover plate 12 into its opened position relative to housing 11.

When it is desired to close coverplate 12 from its opened state, cover plate 12 is simply forced into the closed state. In this manner, the locking portion of cover locking manipulator 17 is shifted along tapered portion 561 of locking member 55 secured to reel supporting spindle 15 so as to be brought into engagement with locking groove 57 formed in locking member 55.

Since it is so constructed that locking member 55 secured to the upper end of shaft 45 of reel supporting spindle 15 is directly engageable with locking portion 98 of cover locking manipulator 17, the size of the tape player of the present invention can be reduced substantially.

Although it has been so described that the size of housing 11 of the tape player of the present invention is selected to be smaller than the outer periphery of cassette tape 24, so that the periphery of cassette tape 24 projects outwardly when it is loaded into the tape player, the invention is not necessarily limited to such a construction, and the size of housing 11 may otherwise be so selected that it is substantially equal to that of cassette tape 24, and at least one end of cassette tape 24 is exposed to the outside when cassette tape 24 is loaded into the tape player.

As described hereinabove, according to the embodiment of the invention, a tape player of a simple construction and of a reduced size can be provided.

A divisional application is published as EP—A—191361 and concerns spring means for engaging an edge of a thickness portion of the cassette (cf. claim 18 of present patent specification).

## Claims

1. Apparatus for transporting tape in a cassette having a reel, said apparatus comprising:
   a housing (11);
   a cover (12) pivotably attached to a first edge of said housing, said housing and said cover defining a cassette receiving space (14) therebetween;
   a first spindle assembly (15) attached to said housing and having a first rotatable portion (52) for co-operating with said reel projecting in said space;
   means (62) for driving said first rotatable portion (52) of said first spindle assembly; and
   means for locking the position of said cover with respect to said housing, characterised in that
   said locking means includes latching means (55), disposed on said spindle assembly, and engaging means (17, 98), disposed on said cover, selectively engaging said latch means and
   said housing (11) has dimensions and said cover is formed such that a tape (24) operable in said receiving space (14) extends beyond said housing in at least one direction.

2. Apparatus according to Claim 1, characterised in that said latch means (55) includes a tapered surface (56) and a groove (57).

3. Apparatus according to Claim 2, characterised in that said engaging means (17, 98) includes a locking plate (17) and is slidably disposed on said cover (12) for selectively engaging said grooves (57) by said plate.

4. Apparatus according to any preceding Claims, characterised in that said latch means (55) is disposed on a portion (45) of said spindle assembly (15) which does not rotate.

5. Apparatus according to any preceding Claims, characterised in that it further includes:
   a second spindle assembly (16) adapted for cooperation with another reel of said tape cassette, for rotating said other reel, a second portion (75) of said second spindle assembly being rotatable about an axis and slidable along said axis; and
   means (83) for rotating said second portion (75) when said second portion is slid in one direction.

6. Apparatus according to any preceding Claims characterised in that the apparatus includes:
   means, disposed in said housing, for generating electrical signals related to data on said tape and further interconnectable to a tuner cassette (33), disposable in said receiving space of said housing and having dimensions such that said tuner cassette does not extend beyond said housing, for receiving radio waves and generating electrical signals related to selected waves.

7. Apparatus according to Claim 6, characterised in that control means (34) of the tuner cassette are disposable in said receiving space (14) and are accessible when said tuner cassette means is disposed in said tape receiving space.

8. Apparatus according to Claim 5 or either of Claims 6 and 7 as dependent on Claim 5, characterised in that said rotatable portion (52) may be rotated selectively in a direction opposite to the direction of said rotatable portion (75).

9. Apparatus according to Claim 8, characterised in that said first portion rotating means, comprise:
   a flywheel (59);
   first transmission means (66, 61, 63, 62, 48) for selectively transferring energy away from said flywheel to said first portion (52); and
   second transmission means (66, 61, 49, 50, 81, 82) for selectively transferring energy from said flywheel to said second portion (75).

10. Apparatus according to Claim 9, characterised in that said first and second transmission means comprise:
    first, second and third concentrically arranged gears (48, 49, 50) fixed with respect to each other;
    a fourth gear (66) engaged with said flywheel (59);
    third means (61, 63, 62) for transferring energy from said fourth gear to said first gear (48) and from said first gear to said first portion (52) during one mode of operation of said apparatus; and
    fourth means (61, 80, 81, 82) for transferring energy from said fourth gear to said second gear (49) and from said third gear (50) to said first portion (75) when said second portion (75) is slid in said one direction.

11. Apparatus according to Claim 10, characterised in that said first, second and third gears (48, 49, 50) are concentric with said spindle assembly (15) and there is provided means (84) for moving said first, second and third gears axially to engage said third means (61, 62).

12. Apparatus according to Claim 10 or 11, characterised in that said third means comprises:
    a fifth gear (62) engageable with said first gear (48); and
    means (61, 63) for transferring a predetermined amount of torque from said fourth gear (66) to said fifth gear.

13. Apparatus according to any preceding Claim, characterised in that the apparatus further includes:

a door (21) pivotally attached to a second edge of said cover opposite said first edge; and

means (23) for biasing said door to extend across said receiving space of said housing, said door being pivoted from across said tape receiving space when a tape cassette (24) is inserted in said receiving space.

14. Apparatus according to Claim 13, characterised in that said door (21) includes a cut out area (22) for avoiding any collision of said spindles assemblies when said door is pivoted by said cassette being inserted.

15. Apparatus according to any preceding Claims characterised in that it further includes a cassette holder (13) disposed in said receiving space (14).

16. Apparatus according to Claim 15, characterised in that said holder (13) is coupled for movement with said cover (12).

17. Apparatus according to Claim 15 or 16, characterised in that said holder (13) includes means (40, 41, 400, 410, 411) adapted for cooperation with a thickened portion (32) of said tape cassette (24), for positioning said tape cassette in said holder in a predetermined manner.

18. Apparatus according to Claim 15, 16 or 17, characterised in that said holder (13) includes spring means (27), disposed in said receiving space (14) and coupled to said cover (12), for engaging an edge of or said thickened portion (32) of said cassette (24) when said tape cassette is in said holder to prevent said tape cassette from withdrawing from said holder.

19. Apparatus according to either of Claims 17 and 18, characterised in that spring means (27) includes a curved portion for engaging said thickened portion edge of the cassette.

20. Apparatus according to any of Claims 19 to 21, characterised in that said holder (13) includes a channel for receiving said tape cassette, said spring means (27) co-operating with said channel for holding said tape cassette (24) in said tape holder.

21. Apparatus according to any of Claims 18 to 22, characterised in that said positioning means (40, 41, 400, 401, 411) include flange portions (400, 401, 410, 411) which lie along said tape cassette (24) when said tape cassette is in said holder (13), said flange portions having edges which co-operate with edges of said thickened portion (32) of said tape cassette to align said tape cassette.

22. Apparatus according to Claim 23, characterised in that said edges of said flange portions (400, 401, 410, 411) are flared for co-operating with edges of said thickened portion (32) of said tape cassette (24) for guiding said tape cassette to said predetermined position.

23. Apparatus according to Claim 21 or 22, characterised in that it is suitable for use with a tape cassette (24) whose thickened portion (32) has an edge proximate a side of said cassette at which said tape is exposed, said positioning means (40, 41, 400, 401, 410, 411) including means defining an edge between said flange portions which abuts this edge of said thickened portion when said tape cassette is in said predetermined position.

24. Apparatus according to Claim 23, characterised in that it is suitable for use with a tape cassette (24) whose thickened portion (32) is disposed on opposite sides of said tape cassette, said positioning means (40, 41, 400, 401, 410, 411) including flange portions (400, 401, 410, 411) for lying along opposite sides of said tape cassette.

## Patentansprüche

1. Gerät für den Bandtransport in einer mit einer Spule versehenen Kassette

mit einem Gehäuse (11),

mit einer an einer ersten Kante des Gehäuses schwenkbar befestigten Abdeckung (12), die zusammen mit dem Gehäuse einen Kassetten-Aufnahmeraum (14) begrenzt,

mit einer ersten an dem Gehäuse angebrachten Wickeldorn-Anordnung (15) mit einem für das Zusammenwirken mit der Spule bestimmten ersten drehbaren Teil (52), das in den Kassetten-Aufnahmeraum hineinragt,

mit Mitteln (62) für den Antrieb des ersten drehbaren Teils (52) der ersten Wickeldorn-Anordnung

sowie mit Mitteln, durch die die Position der Abdeckung relativ zu dem Gehäuse blockierbar ist, dadurch gekennzeichnet,

daß die Blockiermittel eine auf der Wickeldorn-Anordnung angeordnete Verriegelungseinrichtung (55) sowie an der Abdeckung angeordnete Eingriffsmittel (17, 98) für das wahlweise Eingreifen in die Verriegelungseinrichtung aufweist,

und daß das Gehäuse (11) derart dimensioniert und die Abdeckung derart ausgebildet sind, daß eine in dem Kassetten-Aufnahmeraum (14) befindliche betriebsbereite Bandkassette in wenigstens einer Richtung über das Gehäuse hinausragt.

2. Gerät nach Anspruch 1, dadurch gekennzeichnet, daß die Verriegelungseinrichtung (55) aus einer abgeschrägten Fläche (56) und einer Nut (57) besteht.

3. Gerät nach Anspruch 2, dadurch gekennzeichnet, daß die Eingriffeinrichtung (17, 98) eine Verriegelungsplatte (17) umfaßt und derart gleitbar an der Abdeckung (12) angeordnet ist, daß diese Verriegelungsplatte wahlweise mit den Nuten (57) in Eingriff bringbar ist.

4. Gerät nach einem vorhergehenden Ansprüche, dadurch gekennzeichnet, daß die Verriegelungseinrichtung (55) an einem nichtrotierenden Abschnitt (45) der Wickeldorn-Anordnung (15) vorgesehen ist.

5. Gerät nach einem der vorhergehenden Ansprüche, ferner gekennzeichnet durch

eine zweite Wickeldorn-Anordnung (16), die für das Zusammenwirken mit einer weiteren Spule der Bandkassette und zum Drehen dieser weiteren Spule bestimmt ist, wobei diese zweite Wikkeldorn-Anordnung (16) ein zweites drehbares Teil (75) aufweist, das um eine Achse drehbar und längs dieser Achse verschiebbar ist,

sowie Mittel (83), die dieses zweite Teil (75) drehen, wenn es in einer der Richtung verschoben ist.

6. Gerät nach einem der vorhergehenden Ansprüche, gekennzeichnet durch in dem Gehäuse angeordnete Mittel zur Erzeugung von elektrischen Signalen, die den auf dem Band der Bandkassette vorhandenen Daten entsprechen, wobei diese Mittel außerdem mit einer Tuner-Kassette (33) zum Empfang von Rundfunkwellen und zur Erzeugung von ausgewählten Wellen entsprechenden elektrischen Signalen verbindbar sind, die sich in dem Kassetten-Aufnahmeraum des Gehäuses anordnen läßt und solche Abmessungen besitzt, daß sie nicht über das Gehäuse hinausragt.

7. Gerät nach Anspruch 6, dadurch gekennzeichnet, daß sich in dem Kassetten-Aufnahmeraum (14) Steuerungsmittel (34) der Tuner-Kassette anordnen lassen, die zugänglich sind, wenn die Tuner-Kassette in dem Kassetten-Aufnahmeraum angeordnet ist.

8. Gerät nach Anspruch 5 oder einem der Ansprüche 6 und 7, soweit diese auf Anspruch 5 zurückbezogen sind, dadurch gekennzeichnet, daß das erste drehbare Teil (52) wahlweise in einer Richtung drehbar ist, die der Drehrichtung des zweiten drehbaren Teils (75) entgegengesetzt ist.

9. Gerät nach Anspruch 8, dadurch gekennzeichnet, daß die Mittel für den Antrieb des ersten drehbaren Teils

ein Schwungrad (59),

erste Transmissionmittel (66, 61, 63, 62, 48) zur selektiven Energieübertragng von dem Schwungrad auf das erste drehbare Teil (52),

sowie zweite Transmissionmittel (66, 61, 49, 50, 82) zur selektiven Energieübertragung von dem Schwungrad auf das zweite drehbare Teil (75) umfassen.

10. Gerät nach Anspruch 9, dadurch gekennzeichnet, daß die ersten und die zweiten Transmissionmittel folgende Teile umfassen:

erste, zweite und dritte konzentrisch angeordnete Zahnräder (48, 49, 50), die fest miteinander verbunden sind,

ein viertes Zahnrad (66), das mit dem Schwungrad (59) kämmt,

dritte Mittel (61, 63, 62) zur Energieübertragung von dem vierten Zahnrad auf das erste Zahnrad (48) und von dem ersten Zahnrad auf das drehbare Teil (52) während eines Betriebsmodus des Geräts

sowie vierte Mittel (61, 80, 81, 82) zur Energieübertragung von dem vierten Zahnrad auf das zweite Zahnrad (49) und von dem dritten Zahnrad (50) auf das erste drehbare Teil (52), wenn das zweite drehbare Teil (75) in die genannte eine Richtung verschoben ist.

11. Gerät nach Anspruch 10, dadurch gekennzeichnet, das zweite und das dritte Zahnrad (48, 49, 50) konzentrisch zu der ersten Wickeldorn-Anordnung (15) angeordnet sind und daß Mittel (84) vorgesehen sind, durch die das erste, zweite und dritte Zahnrad axial bewegbar sind, um sie mit den dritten Mitteln (61, 62) in Eingriff zu bringen.

12. Gerät nach Anspruch 10 oder 11, dadurch gekennzeichnet, daß die dritten Mittel folgende Teile umfassen:

ein fünftes Zahnrad (62), das mit dem ersten Zahnrad in Eingriff bringbar ist,

sowie Mittel (61, 63) zur Übertragung eines vorbestimmten Anteils des Drehmoments von dem vierten Zahnrad (66) zu dem fünften Zahnrad.

13. Gerät nach einem der vorhergehenden Ansprüche, ferner gekennzeichnet durch

ein Türelement (21), das an einer der genannten ersten Kante entgegengesetzten zweiten Kante schwenkbar angeordnet ist,

sowie Mittel (23) zur Vorspannung des Türelements in eine Orientierung quer zu dem Kassetten-Aufnahmeraum des Gehäuses, aus der es durch Einbringen einer Bandkassette (24) in den Kassetten-Aufnahmeraum wegschwenkbar ist.

14. Gerät nach Anspruch 13, dadurch gekennzeichnet, daß das Türelement (21) einen Ausschnitt (22) besitzt, um eine Kollision mit den Wickeldorn-Anordnung zu verhindern, wenn es beim Einschieben einer Bandkassette verschwenkt wird.

15. Gerät nach einem der vorhergehenden Ansprüche, dadurch gekennzeichnet, daß in dem Kassetten-Aufnahneraum (14) ein Kassettenhalter (13) angeordnet ist.

16. Gerät nach Anspruch 15, dadurch gekennzeichnet, daß der Kassettenhalter (13) mit der Abdeckung (12) bewegungsgekoppelt ist.

17. Gerät nach Anspruch 15 oder 16, dadurch gekennzeichnet, daß der Kassettenhalter (13) Mittel (40, 41, 400, 410, 411) aufweist, die mit einem verdickten Bereich (32) der Bandkassette (24) zusammenwirken können, um die Bandkassette in dem Kassettenhalter in einer vorbestimmten Weise zu positionieren.

18. Gerät nach Anspruch 15, 16 oder 17, dadurch gekennzeichnet, daß der Kassettenhalter (13) ein Federeinrichtung (27) aufweist, die in dem Kassetten-Aufnahmeraum (14) derart angeordnet und mit der Abdeckung (12) derart angeordnet und mit derat verbunden ist, daß sie mit einer Kante oder mit dem verdickten Bereich (32) der Bandkassette (24) in eingriff kommt, wenn diese sich in dem Kassettenhalter befindet, derart daß die Herausziehen der Bandkassette aus dem Kassettenhalter verhindert ist.

19. Gerät nach Anspruch 17 oder 18, dadurch gekennzeichnet, daß die Federeinrichtung (27) einen gebogenen Abschnitt für den Eingriff mit der Kante des verdickten Bandkassette besitzt.

20. Gerät nach einem der Ansprüche 19 bis 21, dadurch gekennzeichnet, daß der Kassettenhalter (13) einen Kanal für die Aufnahme der Bandkassette aufweist und daß die Federeinrichtung (27) mit diesem Kanal zusammenwirkt, um die Bandkassette in dem Kassettenhalter zu halten.

21. Gerät nach einem der Ansprüche 18 bis 22, dadurch gekennzeichnet, daß die Mittel (40, 41, 400, 410, 411) zur Positionierung der Bandkassette Flanschteile (400, 401, 410, 411) besitzen, die entlang der Bandkassette (24) liegen, wenn diese sich in dem Kassettenhalter (13) befindet, wobei diese Flanschteile Kanten haben, die mit Kanten des verdickten Bereichs (32) der Bandkassette zusammenwirken, um diese auszurichten.

22. Gerät nach Anspruch 23, dadurch gekennzeichnet, daß die Kanten der Flanschteile (400, 401, 410, 411) sich nach außen erweitern, um mit Kanten des verdickten Bereichs (32) der Bandkassette (24) zusammenzuwirken und diese in die genannte vorbestimmte Position zu führen.

23. Gerät nach Anspruch 21 oder 22, dadurch gekennzeichnet, daß es sich für die Verwendung einer Bandkassette (24) eignet, deren verdickter Bereich (32) eine Kante in umittelbarer Nähe derjenigen Kassettenseite besitzt, and der das Band freiliegt, und daß die Mittel (40, 41, 400, 401, 410, 411) zur Positionierung der Bandkassette Mittel umfassen, die eine Kante zwischen den Flanschteilen bestimmen, die an dieser Kante des verdickten Bereichs anschlägt, wenn die Bandkassette sich in der vorbestimmten Position befindet.

24. Gerät nach Anspruch 23, dadurch gekennzeichnet, daß es sich für die Verwendung einer Bandkassette eignet, deren verdickter Bereich (32) auf entgegengesetzten Seiten der Bandkassette angeordnet ist, und daß die Mittel (40, 41, 400, 401, 410, 411) zur Positionierung der Bandkassette Flanschteile (400, 401, 410, 411) zur Anlage an entgegengesetzten Seiten der Bandkassette umfassen.

**Revendications**

1. Appareil pour dérouler une bande contenue dans une cassette comportant une bobine, ledit appareil comprenant:

un boîtier (11);

un dessus (12) fixé de façon pivotante à une première arête dudit boîtier, ledit boîtier et ledit dessus définissant entre eux un espace (14) récepteur de cassette;

un premier assemblage d'arbre (15) fixé audit boîtier et comportant une première partie tournante (52) destinée à coopérer avec ladite bobine et dépassant dans ledit espace;

des moyens (62) pour entraîner ladite première partie tournante (52) dudit premier assemblage d'arbre; et des moyens pour bloquer la position dudit dessus par rapport audit boîtier, caractérisé en ce que:

lesdits moyens de blocage comprennent des moyens de verrouillage (55), installés sur ledit assemblage d'arbre, et des moyens d'engagement (17, 98), disposés sur ledit dessus, afin de s'engager de manière sélective avec lesdits moyens de verrouillage, et en ce que ledit boîtier (11) a des dimensions telles et que le dessus est formé de telle façon qu'une cassette de bande (24) pouvant fonctionner dans ledit espace récepteur (14) s'étend au-delà dudit boîtier au moins dans une direction.

2. Appareil selon la revendication 1, caractérisé en ce que lesdits moyens de verrouillage (55) comprennent une surface en pointe (56) et une rainure (57).

3. Appareil selon la revendication 2, caractérisé en ce que lesdits moyens d'engagement (17, 98) comprennent une plaque de blocage (17) et sont disposés en coulissement sur ledit dessus (12) afin d'engager lesdites rainures (57) par ladite plaque.

4. Appareil selon l'une quelconque des revendications précédentes, caractérisé en ce que lesdits moyens de verrouillage (55) sont installés sur une partie (45) dudit ensemble d'arbres (15) qui ne tourne pas.

5. Appareil selon l'une quelconque des revendications précédentes, caractérisé en ce qu'il comprend encore:

un second ensemble d'arbres (16) adapté à coopérer avec une autre bobine de ladite cassette de bande, pour faire tourner ladite autre bobine, une seconde partie (75) dudit second ensemble d'arbres pouvant tourner autour d'un arbres et pouvant coulisser le long dudit arbres, et

des moyens (83) pour faire tourner ladite seconde partie (75), quand ladite seconde partie est glissée dans une direction.

6. Appareil selon l'une quelconque des revendications précédentes, caractérisé en ce que l'appareil comprend:

des moyens, disposés dans ledit boîtier, pour générer des signaux électriques liés aux données enregistrées sur la bande et pouvant encore être interconnectés à une cassette de tuner (33) mise en place de façon amovible dans ledit espace récepteur dudit boîtier et ayant des dimensions telles que la cassette du tuner ne dépasse pas au-delà dudit boîtier pour recevoir des ondes radio et générer des signaux électriques liés à des sélectionnées.

7. Appareil selon la revendication 6, caractérisé en ce que des moyens de commande (34) de la cassette du tuner peuvent être disposés dans ledit espace récepteur (14) et sont accessibles quand lesdits moyens de cassette de tuner sont placés dans ledit espace récepteur de bande.

8. Appareil selon la revendication 5 ou l'une ou l'autre des revendications 6 et 7, qui dépendent de la revendication 5, caractérisé en ce que ladite première partie tournante (52) peut être tournée de manière sélective dans une direction opposée à la direction de ladite seconde partie tournante (75).

9. Appareil selon la revendication 8, caractérisé en ce que lesdits moyens de rotation de la première partie comprennent:

un volant (59);

un premier moyen de transmission (66, 61, 63, 62, 48) pour transférer de manière sélective de l'énergie dudit volant à ladite première partie (52); et

un second moyen de transmission (66, 61, 49, 50, 81, 82) pour transférer de l'énergie de façon sélective depuis ledit volant jusqu'à ladite seconde partie (75).

10. Appareil selon la revendication 9, caractérisé en ce que lesdits premiers et seconds moyens de transmission comprennent:

un premier, un second et un troisième pignons (48, 49, 50) disposés concentriquement et fixés l'un par rapport à l'autre;

un quatrième pignon (66) engagé avec ledit volant (59);

un troisième moyen (61, 62, 63) pour transférer de l'énergie dudit quatrième pignon audit premier pignon (48) et dudit premier pignon à ladite première partie (52) durant un premier mode de fonctionnement dudit appareil; et

un quatrième moyen (61, 80, 81, 82) pour transférer de l'énergie dudit quatrième pignon audit second pignon (49) et dudit troisième pignon (50) à ladite première partie (75) quand ladite seconde partie (75) est glissée dans ladite première direction.

11. Appareil selon la revendication 10, caractérisé en ce que le premier, le second et le troisième pignons (48, 49, 50) sont concentriques avec ledit assemblage d'arbre (15) et en ce qu'il est créé un moyen (84) pour déplacer lesdits premier, second et troisième pignons dans la direction axiale pour engager ledit troisième moyen (61, 62).

12. Appareil selon l'une des revendications 10 ou 11, caractérisé en ce que ledit troisième moyen comprend:

un cinquième pignon (62) pouvant s'engager avec le premier pignon (48); et

un moyen (61, 63) pour transférer une partie prédéterminée du couple dudit quatrième pignon (66) audit cinquième pignon.

13. Appareil selon l'une quelconque des revendications précédentes, caractérisé en ce que l'appareil comprend encore:

un volet (21) fixé en pivotement à un second bord dudit dessus opposé audit premier bord; et

un moyen (23) pour pousser ledit volet afin qu'il se place en travers dudit espace dudit boîtier destiné à recevoir la bande, ledit volet pouvant pivoter à partir du travers dudit espace récepteur de bande quand une cassette de bande (24) est insérée dans ledit espace récepteur.

14. Appareil selon la revendication 13, caractérisé en ce que ledit volet (21) comprend une zone découpée (22) afin d'éviter toute collision desdits ensembles d'arbres lorsque ledit volet est pivoté par l'insertion de ladite cassette.

15. Appareil selon l'une quelconque des revendications précédentes, caractérisé en ce qu'il comprend encore un porte-cassette (13) placé dans ledit espace récepteur (14).

16. Appareil selon la revendication 15, caractérisé en ce que ledit support (13) est couplé pour suivre le mouvement dudit dessus (12).

17. Appareil selon l'une des revendications 15 ou 16, caractérisé en ce que ledit support (13) comprend des moyens (40, 41, 400, 410, 411) adaptés à coopérer avec une partie épaissie (32) de ladite cassette de bande dans (24), afin de positionner ladite cassette de bande ledit support d'une manière prédéterminée.

18. Appareil selon l'une quelconque des revendications 15, 16 ou 17, caractérisé en ce que ledit support (13) comprend des moyens à ressort (27), placés dans ledit espace récepteur (14), et accouplés audit dessus (12), pour s'engager avec une arête de ou avec ladite portion épaissie (32) de ladite cassette (24) quand ladite cassette de bande se trouve dans ledit support afin d'empêcher ladite cassette de bande de sortir dudit support.

19. Appareil selon l'une quelconque des revendications 17 et 18, caractérisé en ce que le moyen (27) comprend une partie courbée pour s'engager avec ledit bord de la partie épaissie de la cassette.

20. Appareil selon l'une quelconque des revendications 19 à 21, caractérisé en ce que ledit support (13) comprend un canal qui reçoit ladite cassette de bande, ledit moyen à ressort (27) coopérant avec ledit canal pour maintenir ladite cassette de bande (24) dans ledit porte-cassette.

21. Appareil selon l'une quelconque des revendications 18 à 22, caractérisé en ce que lesdits moyens de positionnement (40, 41, 401, 411) comprennent des parties formant bride (400, 401, 410, 411) qui sont situées le long de ladite cassette de bande (24) quand ladite cassette de bande se trouve dans ledit support (13), lesdites parties formant bride ayant des arêtes qui coopèrent avec des arêtes de ladite portion épaissie (32) de ladite cassette de bande afin d'aligner ladite cassette de bande.

22. Appareil selon la revendications (21), caractérisé en ce que lesdites arêtes desdites portions formant bride (400, 401, 410, 411) sont évasées pour coopérer avec des arêtes de ladite partie épaissie (32) de ladite cassette de bande (24) afin de guider ladite cassette de bande vers ladite position prédéterminée.

23. Appareil selon l'une des revendications 21 ou 22, caractérisé en ce qu'il est approprié pour être utilisé avec une cassette de bande (24) dont la partie épaissie (32) présente une arête à proximité d'un côté de ladite cassette sur lequel ladite bande est exposée, lesdits moyens de positionnement (40, 41, 400, 401, 410, 411) comprenant des moyens définissant une arête entre lesdites parties formant bride qui viennent buter contre cette arête de ladite partie épaissie quand ladite cassette de bande se trouve dans ladite position prédéterminée.

24. Appareil selon la revendication 23, caractérisé en ce qu'il est approprié pour être utilisé avec une cassette de bande (24) dont la partie épaissie (32) est placée sur des faces opposées de ladite cassette de bande, lesdits moyens de positionnement (40, 41, 400, 401, 410, 411) comprenant des parties formant bride (400, 401, 410, 411) pour se placer le long desdits côtés opposés de ladite cassette de bande.

# FIG. 1.

# FIG. 2.

FIG.3.

FIG.4.

# FIG.5.

# FIG.6.

FIG. 7.

FIG. 8.

(a)

(b)

H
G

H
G

0 105 746

FIG.9

FIG.10.